# FASCICULE DE BREVET EUROPEEN

(11) **EP 1 527 955 B1**
(45) Date de publication et mention de la délivrance du brevet: **27.09.2006**
(21) Numéro de dépôt: 04292415.9
(22) Date de dépôt: 12.10.2004
(51) Int. Cl.: B60R 13/08

(54) **Panneau de portière à crochets autoagrippant**
Türverkleidungsteil mit Klettverschluss
Door panel with hook type fastening element

(30) Priorité: 29.10.2003 FR 0312639
(43) Date de publication de la demande: 04.05.2005
(73) Titulaire: Aplix, 75008 Paris (FR)
(72) Inventeur: Billarant, Fabrice, 44000 Nantes (FR)
(74) Mandataire: Eidelsberg, Olivier Nathan

(56) Documents cités:
- FR-A- 2 837 156
- GB-A- 1 209 413
- US-A- 5 482 343
- PATENT ABSTRACTS OF JAPAN vol. 0080, no. 16 (M-270), 24 janvier 1984 (1984-01-24) & JP 58 177744 A (NISSAN JIDOSHA KK), 18 octobre 1983 (1983-10-18)

## Description

La présente invention se rapporte à des panneaux de carrosserie de véhicule automobile, notamment des panneaux de porte ou portière, sur lesquels est fixé une feuille ayant des propriétés d'insonorisation.

Dans les panneaux actuels, la fixation s'effectue par fusion de pions plastiques insérés dans un logement du panneau de porte et qui sont réalisés par injection, par soudure à l'ultrason de matières compatibles ou par adhésifs, notamment par points de colle hot melt.

Le document FR-A-2837156 décrit un tel panneau auquel est fixé, par un cordon de matière adhésive, un panneau utilisé pour l'étanchéité et l'insonorisation des portes.

Ces techniques sont longues et fastidieuses, notamment en raison des applications par points et du fait que ces techniques s'effectuent nécessairement en deux étapes, la première étant le positionnement dans le panneau et le deuxième son assujettissement au panneau.

En outre, une fois la feuille d'insonorisation fixée, on ne peut plus en modifier le positionnement, de sorte qu'il faut prévoir un outillage complexe pour s'assurer que dès la première pose, la feuille est fixée dans la bonne position.

Enfin, la présence des nombreux points de soudure ou de colle au sein même de la feuille d'insonorisation nuit à sa caractéristique de résistance à l'écoulement d'air, et par conséquent diminue ses propriétés d'insonorisation.

La présente invention vise un assemblage formant panneau de porte ou portière, dans lequel il est facile et rapide de fixer (notamment en une seule étape) une feuille d'insonorisation, en général sous la forme d'un feutre, d'une mousse ou d'un non tissé, et notamment sur lequel on est sûr de bien positionner la feuille d'insonorisation en fin d'étape de fixation sans avoir à prévoir un outillage complexe ni à reprendre une procédure de fixation longue et fastidieuse, notamment par application ponctuelle en de nombreux points de l'interface panneau-feuille d'insonorisation, et la qualité d'insonorisation étant en outre améliorée.

Suivant l'invention, un assemblage formant panneau de porte d'un véhicule automobile, comportant un panneau de porte et une feuille d'insonorisation fixée au panneau de porte, est caractérisé en ce que le panneau de porte comporte, sur sa surface tournée vers la feuille d'insonorisation, des crochets, et un tricot à boucles ou un non tissé à boucles est fixé sur la surface de la feuille d'insonorisation tournée vers le panneau, le tricot ou le non tissé à boucles ayant un poids compris entre 15 et 60 g/m², de préférence entre 15 et 40 g/m².

En prévoyant ainsi un système à crochets et tricot ou non tissé à boucles, on obtient un système particulièrement simple pour fixer rapidement, solidement et dans la bonne position la feuille d'insonorisation au panneau de porte, avec en outre une insonorisation améliorée par rapport à l'art antérieur.

Suivant un mode de réalisation préféré, les crochets sont issus d'une pièce du panneau de porte, les crochets étant notamment réalisés par moulage par injection.

Suivant un mode de réalisation préféré, la feuille d'insonorisation est un feutre, notamment ayant un poids compris entre 40 et 500 g/m².

Suivant un mode de réalisation préféré, la feuille d'insonorisation est en mousse, la fixation au tricot ou au non tissé à boucles s'effectuant notamment par foamage ou moussage.

Suivant un mode réalisation préféré, la surface du panneau destinée à recevoir la feuille comporte des crochets disposés sur des petites régions, de préférence de 1 à 5 cm², espacées les unes des autres, notamment de manière régulière, notamment de 5 à 25 par m² de panneau.

La technique du foamage consiste à faire fondre la mousse pour la fixer au tricot.

La présente invention se rapporte également à un laminé formant feuille d'insonorisation, comportant une feuille d'insonorisation, notamment en mousse, non tissé ou feutre, et ayant notamment un poids compris entre et , caractérisée par un tricot ou un non tissé à boucles fixé, notamment par collage, foamage ou autre, à la feuille d'insonorisation, notamment sur la totalité d'un côté de la feuille, le tricot ou le non tissé à boucles ayant un poids compris entre 15 et 60 g/m², de préférence entre 15 et 40 g/m².

Aux dessins, donnés uniquement à titre d'exemples, il est représenté un mode de réalisation de l'invention,

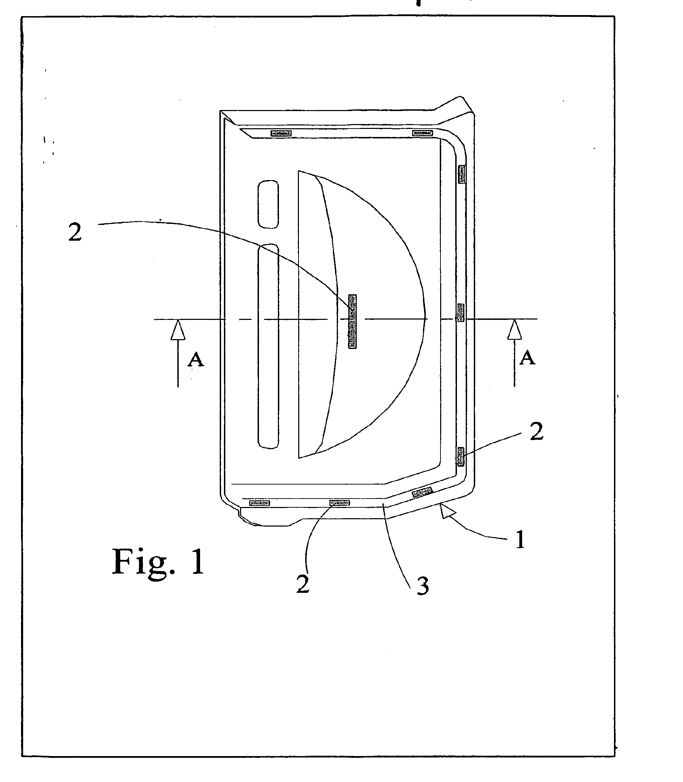

La figure 1 représentant sous forme schématique une vue d'un panneau de portière suivant l'invention,

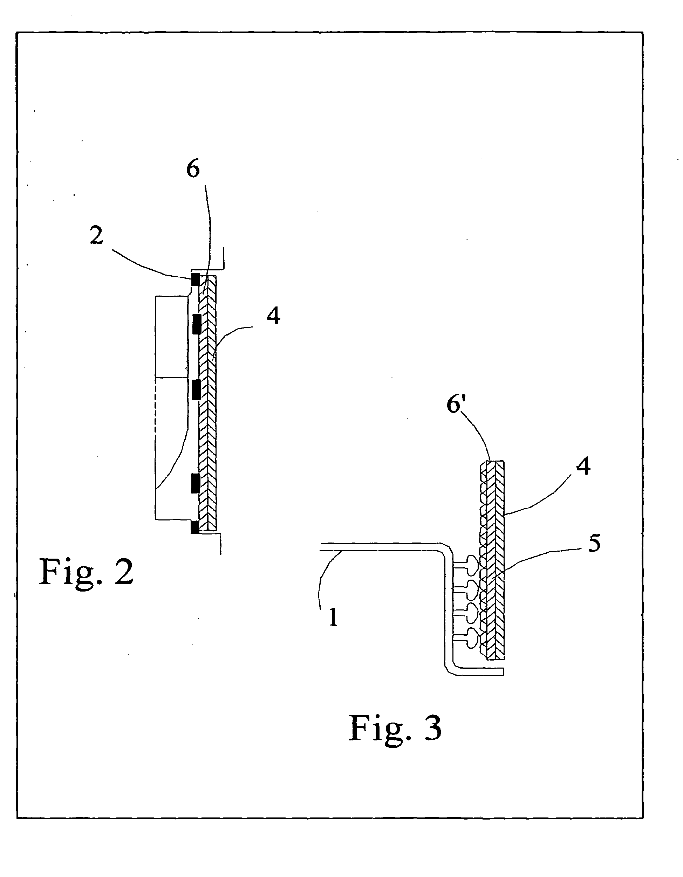

la figure 2 représentant une vue en coupe suivant A-A du panneau de la figure 1 auquel un laminé formant feuille d'insonorisation est fixé, et

la figure 3 représentant à plus grande échelle une partie de la figure 2.

Aux figures, l'assemblage formant panneau de porte d'un véhicule automobile, comporte un panneau 1, notamment en matière par exemple plastique, ayant une surface 3 dont sont issus des crochets 2, formés par moulage par injection. Un procédé de fabrication d'un panneau comportant des crochets moulés de ce genre est décrit notamment au brevet européen N°0577697 au nom de Aircast Inc..

Les crochets 2 peuvent également être fabriqués à part, par exemple sous la forme d'une nappe de crochets, qui est ensuite fixée par collage au panneau.

Suivant un mode de réalisation préféré en variante, la surface 3 comprend un réseau de petites régions à crochets, de 1 à 5 cm² de préférence, espacées les unes des autres de 5 à 25 par m² de panneau, en particulier suivant un agencement régulier.

L'assemblage formant panneau comporte également un assemblage formant feuille d'insonorisation. Cet assemblage formant feuille est constitué d'une feuille 4 en matériau insonorisant, par exemple en PETON PP, sous la forme d'un non tissé. La feuille 4 peut également être un feutre ou une mousse. Le poids de la feuille 4 est compris entre 40 et 500 g/m², en particulier entre 60 g/m² et 200 g/m².

Un tricot 6 à boucle, comportant par exemple un entrelacement de fils de trame, de fils de colonnes de maille et de fils de boucles, est contrecollé sur une surface 5 de la feuille 4 d'insonorisation.

Le tricot a un poids compris entre 15 g/m² et 60 g/m², notamment entre 15 et 40 g/m².

Ce collage peut se faire notamment suivant le procédé décrit au brevet français N°96 082 59 au nom de la demanderesse ou par tout autre procédé bien connu de collage, soudage, fusion, etc.

Suivant un autre mode de réalisation, un non tissé 6'à boucles ou bouclette est fixé par collage à la surface 5 de la feuille 4.

Le non tissé à boucles a un poids compris entre 15 et 60 g/m², de préférence entre 15 et 40 g/m².

De préférence, la totalité de la surface 5 est recouverte du tricot 6 ou du non tissé 6', ou d'une combinaison des deux.

Les crochets ont notamment une hauteur h comprise entre 0,3 et 3,5 mm.

## Revendications

1. Assemblage formant panneau de porte d'un véhicule automobile, comportant un panneau (1) de porte et une feuille (4) d'insonorisation fixée au panneau de porte, **caractérisé en ce que** le panneau de porte comporte, sur sa surface (3) à laquelle est fixée la feuille d'insonorisation, des crochets (2), et un tricot (6) à boucle ou un non tissé (6') à boucle est fixé sur la surface de la feuille d'insonorisation destinée à être fixée au panneau, le tricot ou le non tissé à boucles ayant un poids compris entre 15 et 60 g/m², de préférence entre 15 et 40 g/m².

2. Assemblage suivant la revendication 1, **caractérisé en ce que** les crochets sont issus d'une pièce du panneau de porte, les crochets étant notamment réalisés par moulage par injection.

3. Assemblage suivant la revendication 1 ou 2, **caractérisé en ce que** la surface du panneau destinée à recevoir la feuille comporte des crochets disposés sur des petites régions, de préférence de 1 à 5 cm², espacées les unes des autres, notamment de manière régulière, notamment de 5 à 25 par m² de panneau.

4. Assemblage suivant l'une des revendications 1 à 3, **caractérisé en ce que** le tricot ou le non tissé à boucles recouvre toute la surface de la feuille.

5. Assemblage suivant l'une des revendications 1 à 4, **caractérisé en ce que** les crochets ont une hauteur comprise entre 0,3 et 3,5 mm.

6. Assemblage suivant l'une des revendications 1 à 5, **caractérisé en ce que** la feuille d'insonorisation est un feutre, notamment ayant un poids compris entre 40 et 500 g/m².

7. Assemblage suivant l'une des revendications 1 à 6, **caractérisé en ce que** la feuille d'insonorisation est en mousse, la fixation au tricot ou au non tissé à boucles s'effectuant notamment par foamage ou moussage.

8. Laminé formant feuille d'insonorisation pour un assemblage suivant l'une des revendications 1 à 7, comportant une feuille d'insonorisation, notamment en mousse, non tissé ou feutre, **caractérisé par** un tricot ou un non tissé à boucles fixé, notamment par collage, foamage ou autre, à la feuille d'insonorisation, le tricot ou le non tissé à boucles ayant un poids compris entre 15 et 60 g/m², de préférence entre 15 et 40 g/m², le tricot ou le non tissé recouvrant la feuille d'insonorisation sur la totalité d'un côté de la feuille.

9. Panneau de porte ou portière pour un assemblage suivant l'une des revendications 1 à 7, constitué d'un panneau et **caractérisé par** des crochets étant issus d'une surface (3) du panneau, les crochets ayant une hauteur comprise entre 0,3 mm et 3,5 mm.

10. Panneau suivant la revendication 9, **caractérisé en ce que** le panneau comporte des crochets, la surface du panneau destinée à recevoir la feuille comporte des crochets disposés sur des petites régions, de préférence de 1 à 5 cm², à distance les unes des autres, notamment de manière régulière, notamment de 5 à 25 par m² de panneau.

## Claims

1. Assembly forming a door panel of a motor vehicle, comprising a door panel (1) and a soundproofing sheet (4) fixed to the door panel, **characterised in that** the door panel comprises hooks (2) on its surface (3) to which the soundproofing sheet is fixed and a looped knitted fabric (6) or looped non-woven material (6') is fixed on the surface of the soundproofing sheet intended to be fixed to the panel, the looped knitted fabric or non-woven material weighing between 15 and 60 g/m², preferably between 15 and 40 g/m².

2. Assembly according to claim 1, **characterised in that** the hooks come from a piece of the door panel, whereby the hooks are realised in particular through injection moulding.

3. Assembly according to claim 1 or 2, **characterised in that** the surface of the panel intended to receive the sheet comprises hooks arranged on small regions, preferably of 1 to 5 cm², spaced apart from each other, particularly regularly, particularly 5 to 25 per m² of panel.

4. Assembly according to one of the claims 1 to 3, **characterised in that** the looped knitted fabric or non-woven material covers the whole surface of the sheet.

5. Assembly according to one of the claims 1 to 4, **characterised in that** the height of the hooks is between 0.3 and 3.5 mm.

6. Assembly according to one of the claims 1 to 5, **characterised in that** the soundproofing sheet is a felt, particularly weighing between 40 and 500 g/m².

7. Assembly according to one of the claims 1 to 6, **characterised in that** the soundproofing sheet is made of foam, the fixing to the looped knitted fabric or non-woven material being carried out in particular by foaming.

8. Laminate forming soundproofing sheet for an assembly according to one of the claims 1 to 7, comprising a soundproofing sheet, particularly made of foam, non-woven material or felt, **characterised by** a looped knitted fabric or non-woven material which is fixed, particularly by adhesion, foaming or other, to the soundproofing sheet, the looped knitted fabric or non-woven material weighing between 15 and 60 g/m², preferably between 15 and 40 g/m², the knitted fabric or non-woven material covering the soundproofing sheet over the whole of one side of the sheet.

9. Door panel for an assembly according to one of the claims 1 to 7, constituted by a panel and **characterised by** hooks coming from a surface (3) of the panel, the height of the hooks being between 0.3 mm and 3.5 mm.

10. Panel according to claim 9, **characterised in that** the panel comprises hooks, the surface of the panel intended to receive the sheet comprises hooks arranged on small regions, preferably between 1 to 5 cm²' spaced apart from each other, particularly regularly, particularly 5 to 25 per m² of panel.

## Patentansprüche

1. Aufbau, der eine Platte einer Tür eines Kraftfahrzeugs bildet, mit einer Türplatte (1) und einer an der Türplatte befestigten Schalldämpfungslage (4), **dadurch gekennzeichnet, dass** die Türplatte an ihrer Oberfläche (3), an der die Schalldämpfungslage befestigt ist, Haken (2) umfasst, und ein Maschengewebe (6) oder ein Maschen-Vliesgewebe (6') an der Oberfläche der Schalldämpfungslage befestigt ist, die an der Platte zu befestigen ist, wobei das Maschengewebe oder das Maschen-Vliesgewebe ein Gewicht hat, das zwischen 15 und 60 g/m², vorzugsweise zwischen 15 und 40 g/m² liegt.

2. Aufbau nach Anspruch 1, **dadurch gekennzeichnet, dass** die Haken aus einem Teil der Türplatte hervorstehen, wobei die Haken durch Spritzgießen hergestellt sind.

3. Aufbau nach Anspruch 1 oder 2, **dadurch gekennzeichnet, dass** die Oberfläche der zur Aufnahme der Lage vorgesehenen Platte Haken aufweist, die in kleinen Bereichen, vorzugsweise von ein bis fünf cm² angeordnet sind, welche voneinander auf regelmäßige Weise, nämlich 5 bis 25 pro m² Platte beabstandet sind.

4. Aufbau nach einem der Ansprüche 1 bis 3, **dadurch gekennzeichnet, dass** das Maschengewebe oder das Maschen-Vliesgewebe die gesamte Oberfläche der Lage bedeckt.

5. Aufbau nach einem der Ansprüche 1 bis 4, **dadurch gekennzeichnet, dass** die Haken eine Höhe aufweisen, die zwischen 0,3 und 3,5 mm liegt.

6. Aufbau nach einem der Ansprüche 1 bis 5, **dadurch gekennzeichnet, dass** die Schalldämpfungslage ein Filz ist, der ein Gewicht zwischen 40 und 500 g/m² aufweist.

7. Aufbau nach einem der Ansprüche 1 bis 5, **dadurch gekennzeichnet, dass** die Schalldämpfungslage ein Schaumstoff ist, wobei die Befestigung an dem Maschengewebe oder dem Maschen-Vliesgewebe durch Foaming oder Schaumstoffbildung erfolgt.

8. Schichtstoff, der eine Schalldämpfungslage für einen Aufbau gemäß einem der Ansprüche 1 bis 7 bildet, mit einer Schalldämpfungslage aus Schaumstoff, Vliesgewebe oder Filz, **gekennzeichnet durch** ein Maschengewebe oder ein Maschen-Vliesgewebe, das **durch** Verkleben, Foaming o.a. an der Schalldämpfungslage befestigt ist, wobei das Maschengewebe oder das Maschen-Vliesgewebe ein zwischen 15 und 60 g/m² vorzugsweise zwischen 15 und 40 g/m² liegendes Gewicht aufweist, und das Gewebe oder Vliesgewebe die Schalldämpfungslage auf einer gesamten Seite der Lage bedeckt.

9. Türplatte für einen Aufbau gemäß einem der Ansprüche 1 bis 7, gebildet aus einer Platte und **gekennzeichnet durch** Haken, die von einer Oberfläche (3) der Platte vorstehen, wobei die Haken eine Höhe zwischen 0,3 mm und 3,5 mm aufweisen.

10. Platte nach Anspruch 9, **dadurch gekennzeichnet, dass** die Platte Haken umfasst, und die zur Aufnahme der Lage vorgesehene Oberfläche der Platte Haken aufweist, die in kleinen Bereichen, vorzugsweise von 1 bis 5 cm² voneinander regelmäßig beabstandet sind, und zwar zwischen 5 und 25 pro m² der Platte.
